(19) Europäisches Patentamt
European Patent Office
Office européen des brevets

(11) Veröffentlichungsnummer: **0 359 016 B1**

# (12) EUROPÄISCHE PATENTSCHRIFT

(45) Veröffentlichungstag der Patentschrift: **12.10.94**

(51) Int. Cl.[5]: **B05D 1/20**, C08G 63/16, G02F 1/35

(21) Anmeldenummer: **89115803.2**

(22) Anmeldetag: **26.08.89**

(54) **Beschichtete Träger mit ultradünner, mehrlagiger Beschichtung und Verfahren zu ihrer Herstellung.**

(30) Priorität: **10.09.88 DE 3830862**

(43) Veröffentlichungstag der Anmeldung:
**21.03.90 Patentblatt 90/12**

(45) Bekanntmachung des Hinweises auf die Patenterteilung:
**12.10.94 Patentblatt 94/41**

(84) Benannte Vertragsstaaten:
**AT BE CH DE FR GB IT LI NL SE**

(56) Entgegenhaltungen:
**US-A- 4 757 130**

**PATENT ABSTRACTS OF JAPAN, (C-099), 22. April 1982, Seite 164 C 99;& JP-A-57 005 718**

**Journal of molecular electronics, Vo. 1, pages 3-17 (1985)**

(73) Patentinhaber: **BAYER AG**

**D-51368 Leverkusen (DE)**

(72) Erfinder: **Wehrmann, Rolf, Dr.**
**Buschstrasse 163**
**D-4150 Krefeld 1 (DE)**
Erfinder: **Schopper, Heinrich-Christian, Dr.**
**Glindholzstrasse 95a**
**D-4150 Krefeld 1 (DE)**
Erfinder: **Nerger, Dittmar, Dr.**
**c/o Mobay Corporation**
**Mobay Road**
**Pittsburgh Pennsylvania 15205-9741 (US)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 359 016 B1

## Beschreibung

Die vorliegende Erfindung betrifft neue beschichtete Träger mit ultradünner, mehrlagiger Beschichtung, bei denen das Beschichtungsmaterial ein Polyester ist, weiterhin ein Verfahren zur Herstellung solcher beschichteter Träger.

Beschichtete Träger finden in der industriellen Technik mannigfaltige Verwendung. Beispielsweise können die Reibungseigenschaften von Materialien durch Modifizierung der Oberfläche einem gewünschten Zweck angepaßt werden. Weiterhin kann es sich um einen Schutzfilm für die darunterliegenden Träger handeln, um deren besondere Oberflächeneigenschaften zu konservieren. Insbesondere haben jedoch in letzter Zeit beschichtete Träger als Komponenten in Bauelementen für die optische Kommunikationstechnik sowie als elektronische und optoelektronische Informationsspeicher Einsatz gefunden.

Insbesondere für die elektronischen und optischen Einsatzzwecke ist es erforderlich, ultradünne, defektfreie mehrlagige Beschichtungen zu erzeugen, deren Lagen einen hohen Ordnungsgrad und eine einstellbare, möglichst homogene Schichtdicke haben, wobei dieser hohe Ordnungsgrad auch im Bereich hoher Anzahl von Beschichtungslagen erhalten bleiben soll.

Die aus den organischen Polymeren hergestellten dünnen Schichten stellen hierbei die Grundlage für auf molekularer Ebene geordnete, defektfreie Systeme dar, wie sie z.B. erforderlich sind für

- optische Anwendungen (gerichtete Strahlung geringer Dämpfung, z.B. Lichtwellenleiter mit nichtlinearoptischen Eigenschaften),
- elektrische Anwendungen (elektrische Leiter hoher Anisotropie, z.B. eindimensionale oder zweidimensionale Leiter auf dem Gebiet der Molekularelektronik),
- "Wirtsgitter" für den definierten Einbau bzw. eine spezifische Bindung von funktionellen Gruppen oder Molekülen (z.B. Biomoleküle für Sensoren).

Es ist bereits bekannt, aus amphiphilen niedermolekularen Molekülen mit je einem polaren bzw. nichtpolaren Ende, wie etwa langkettigen Fettsäuren, auf der Oberfläche eines Nichtlösemittels wie Wasser monomolekulare Schichten zu erzeugen, in denen alle polaren Enden beispielsweise zum Wasser zeigen, während die unpolaren Enden in den Gasraum darüber hineinragen. Hierzu werden geringe Mengen solcher amphiphiler Stoffe in einem geeigneten Lösungsmittel gelöst und beispielsweise auf eine Wasseroberfläche ausreichender Größe gegeben, wo sie unter Verdunsten des Lösungsmittels zu einer zunächst nicht zusammenhängenden, monomolekularen Schicht spreiten. Durch Verschieben einer geeigneten Barriere wird die Wasseroberfläche verkleinert und die damit verbundene Zunahme der Oberflächenspannung als Funktion der noch zur Verfügung stehenden Fläche gemessen (d.h. Aufnahme der dem Fachmann bekannten Schub-Flächen-Diagramme, auch $\pi$/A-Isotherme genannt).

Dabei ergibt sich eine zusammenhängende, auf molekularer Ebene geordnete monomolekulare Schicht. Beim Erreichen dieses quasi-festen Zustandes dieser monomolekularen Schicht wird dem weiteren Verschieben dieser Barriere ein deutlich meßbarer Widerstand entgegengesetzt, der das Erreichen dieses Zustandes anzeigt. Geeignete Träger können sodann durch die monomolekulare Schicht in das Wasser getaucht werden und überziehen sich beim Eintauchen und/oder Herausziehen ihrerseits mit einer monomolekularen Schicht des amphiphilen Stoffes, wobei die molekulare Ordnung in den Einzelschichten erhalten bleibt.

Der genannte Vorgang läßt sich wiederholen. Diese Beschichtungstechnik ist als Langmuir-Blodgett-Technik dem Fachmann bekannt.

Beschichtungen aus monomeren amphiphilen Stoffen sind jedoch chemisch, thermisch und mechanisch instabil, d.h. die molekulare Ordnung kann durch chemische und/oder physikalische Einflüsse verloren gehen. Man hat daher versucht, amphiphile Stoffe mit einer reaktionsfähigen Doppel-oder Mehrfachbindung auf Träger aufzuziehen und nachträglich beispielsweise durch energiereiche Strahlung zu einem Polymer zu vernetzen.

Vielfach untersuchte Beispiele für die Polymerisation ungesättigter amphiphiler Stoffe sind Diacetylencarbonsäuren und $\omega$-Trikosensäure. Die gravierenden Nachteile dieser Stoffe sind ihre hohe Reaktivität, wodurch sie häufig nur schwer in reiner Form zu erhalten sind. Im Verlaufe der Polymerisation nach der Übertragung auf den Träger entstehen durch Schrumpf oft Defekte, wie makroskopische Risse in der Beschichtung.

Es hat auch bereits Versuche gegeben, polymere Stoffe wie Polystyrol und Polymethylmethacrylat in die Langmuir-Blodgett-Technik einzubeziehen. Polymere bringen jedoch einerseits durch die statistische Unordnung in der Polymerkette, andererseits auch durch Überstrukturen der Polymeren Schwierigkeiten in der Ausrichtung der polaren bzw. der unpolaren Strukturanteile mit sich. Daher ist stets zu untersuchen, ob die Amphiphilie (d.h. der Polaritätsunterschied zwischen den polaren und den unpolaren Gruppen) ausreichend ist, um Beschichtungen hoher molekularer Ordnung und hoher Reproduzierbarkeit zu erzielen.

Hierbei wird häufig die sogenannte Y-Struktur angestrebt, bei der in mehrlagigen Beschichtungen von einer Lage zur anderen sich jeweils die polaren bzw. die unpolaren Strukturelemente gegenüberstehen. Für spezielle Anwendungen, z.B. nichtlinear optisch aktive Schichten kann diese Y-Struktur von Nachteil sein; mit den weiter unten beschriebenen Polyester lassen sich unter geeigneten experimentellen Bedingungen auch Schichten des X- bzw. Z-Typs herstellen. In Journal of Molecular Elektronics 1 (1985), 3-17 sind die angesprochenen Sachverhalte ausführlich dargestellt.

Es wurden nun nach der Langmuir-Blodgett-Technik hergestellte beschichtete Träger mit ultradünner, mehrlagiger Beschichtung mit 10-40 Einzellagen aus organischem Polymermaterial gefunden, die dadurch gekennzeichnet sind, daß als Polymer ein Polyester der Struktur

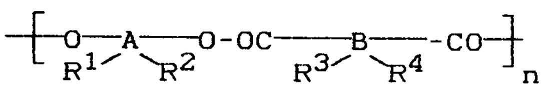
(I)

eingesetzt wird, worin

A das Gerüst eines aliphatischen, araliphatischen oder aromatischen Diols ist,
B das Gerüst einer aliphatischen, araliphatischen oder aromatischen Dicarbonsäure ist,
n Werte von 2 bis 80 annimmt und

mindestens einer der Substituenten $R^1$ bis $R^4$ einen normalkettigen aliphatischen Rest darstellt und jeweils die anderen Wasserstoff oder Methyl bedeuten, wobei der aliphatische Rest mindestens 8 C-Atome aufweist und die Anbindung der normalkettigen aliphatischen Reste an das Gerüst A bzw. B auch über Heteroatome enthaltende Gruppen erfolgen kann, wobei im Falle zweier normalkettiger aliphatischer Rest an einem Gerüst diese gleich sind, wobei der Begriff normalkettig einen Verzweigungsgrad von maximal einer Methylgruppe pro 8 C-Atomen in der Kette umfaßt und wobei ferner $R^1$ und $R^2$ gemeinsam und $R^3$ und $R^4$ gemeinsam eine Alkylenkette bilden können, mit Ausnahme der in JP 57/5718 (1982) für die Herstellung sehr dünner Folien beschriebenen Polyester der Formel

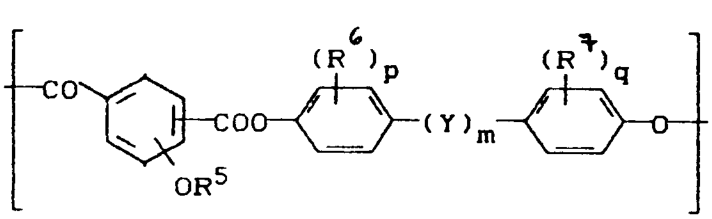
(IV),

in der

$R^5$ für $C_1$-$C_{30}$-Alkyl steht,
$R^6$ und $R^7$ Halogen oder $C_1$-$C_4$-Hydrocarbyl bedeuten,
Y für -O-, -S-, -$SO_2$-, -CO-, $C_1$-$C_8$-Alkylen oder $C_1$-$C_8$-Alkyliden steht,
p und q Null bis Vier bedeuten,
m Null oder Eins bedeutet und

die beiden CO-Gruppen meta- und para-ständig zueinander sind.

Es wurde weiterhin ein Verfahren zur Herstellung solcher beschichteter Träger gefunden, das dadurch gekennzeichnet ist, daß man eine Lösung des genannten Polyesters auf die Oberfläche einer Flüssigkeit, in der sich weder der Polyester noch dessen Lösungsmittel lösen, bringt und ein Substrat nach der Langmuir-Blodgett-Technik mit der gewünschten Anzahl von Beschichtungslagen versieht.

In den Polyestern der Formel (I) stellen die Esterbindungen jeweils die polaren Gruppen dar, während die normalkettigen aliphatischen Reste $R^1$ bis $R^4$ die unpolaren Gruppen darstellen. Die aliphatischen Reste sind normalkettig, d.h. sie haben einen Verzweigungsgrad von maximal einer Methylgruppe pro 8 Kohlenstoffatomen in der Kette. In bevorzugter Weise sind jedoch strikt normalkettige aliphatische Reste im erfindungsgemäßen Polyester vorhanden.

Von den Substituenten $R^1$ bis $R^4$ stellt mindestens einer einen normalkettigen aliphatischen Rest dar, während diejenigen Substituenten $R^1$ bis $R^4$, die nicht solche aliphatischen Reste bedeuten, für Wasserstoff oder Methyl stehen. Die aliphatischen Reste weisen mindestens 8 C-Atome, beispielsweise 8-32, bevorzugt 8-28, besonders bevorzugt 8-22 C-Atome auf. Die aliphatischen Reste sind an das Gerüst A bzw. B gebunden.

Sofern die Reste $R^1$ bis $R^4$ normalkettige aliphatische Reste darstellen, sind die mit einem Gerüst verbundenen Reste $R^1$ und $R^2$ gleich; ebenso sind $R^3$ und $R^4$ gleich können aber verschieden sein von $R^1$ und $R^2$. Des weiteren können $R^1$ und $R^2$ gemeinsam und ebenfalls $R^3$ und $R^4$ gemeinsam, jedoch unabhängig von $R^1$ und $R^2$, eine Alkylenkette bilden, die jeweils 8 bis 32 C-Atome haben kann. Bevorzugt werden Polyester eingesetzt, die nur 1 oder 2 normalkettige aliphatische Reste pro Struktureinheit enthalten, die sowohl mit dem Gerüst A als auch mit B verbunden sein können. Für den Fall zweier Reste ist es weiterhin bevorzugt, daß beide entweder mit dem Gerüst A oder mit B verbunden sind.

Normalkettige aliphatische Reste und aus $R^1$ und $R^2$ gemeinsam bzw. $R^3$ und $R^4$ gemeinsam gebildete Alkylenketten der genannten Art sind dem Fachmann geläufig.

Polyester der Formel (I) können aus Diolen der Formel

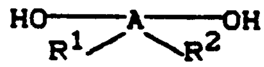

(II)

oder ihren Estern mit niedrig siedenden aliphatischen Carbonsäuren, wie Essigsäure, Propionsäure oder Buttersäure, bevorzugt mit Essigsäure,
und Dicarbonsäuren der Formel

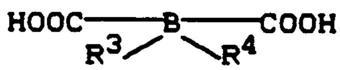

(III)

oder ihren Säurechloriden, Säurebromiden oder ihren Estern mit niedrigen aliphatischen Alkoholen, wie Methanol, Ethanol, Propanol oder Butanol, bevorzugt mit Methanol oder Ethanol, in denen

$R^1$, $R^2$, $R^3$ und $R^4$ die obengenannte Bedeutung besitzen,

in einer dem Fachmann bekannten Weise hergestellt werden.

Beispiele für solche bekannten Herstellungsweisen sind

a) Umsetzung eines Diols mit einer Dicarbonsäure unter Austritt von Wasser;

b) Umsetzung eines Diols mit einem Dicarbonsäureester der genannten Art unter Austritt eines niederen Alkohols;

c) Umsetzung eines Diols mit einem Dicarbonsäurechlorid(-bromid) unter Austritt von HCl (HBr), etwa durch Grenzflächenpolykondensation;

d) Umsetzung eines Diolesters der genannten Art mit einer Dicarbonsäure.

Gegebenenfalls werden solche Umsetzungen katalytisch beschleunigt. Wichtige Umsetzungen sind die nach b), c) und d); besonders wichtig sind die nach b), die nach c) im Falle aromatischer Dicarbonsäuren und die nach d) im Falle aromatischer Diole.

Im bevorzugten Fall, daß nur eines der Gerüste A oder B 1 oder 2 im wesentlichen normalkettige aliphatische Reste trägt, ist das jeweils andere Gerüst das eines Diols oder einer Dicarbonsäure, wie sie auch sonst zur Herstellung von Polyestern eingesetzt werden.

A und B können unabhängig voneinander das Gerüst eines aliphatischen, cycloaliphatischen, aromatischen oder araliphatischen Diols bzw. einer Dicarbonsäure (gegebenenfalls als Ester oder Säurehalogenid) sein. Der aliphatische Teil kann beispielsweise 2-20, bevorzugt 2-12, besonders bevorzugt 2-8 C-Atome haben und im Falle der Malonsäure nur 1 C-Atom enthalten. Der cycloaliphatische Teil kann beispielsweise 5-10, bevorzugt 6-8 C-Atome haben. Der araliphatische Teil kann beispielsweise 7-30 C-Atome haben. Der aromatische Teil kann beispielsweise 6-12, bevorzugt 6-10 C-Atome haben.

Falls in den araliphatischen oder aromatischen Teilen mehrere aromatische Kerne auftreten, können diese durch Ether-, Ketonbrücken, $SO_2$-Gruppen und/oder durch $C_1$-$C_6$-Alkylen-bzw. Cycloalkylengruppen verknüpft sein.

Aliphatische Teile können weiterhin verzweigt sein und durch O-Atome, durch NH- oder N-$C_1$-$C_4$-Alkyl-Gruppen unterbrochen sein.

Solche Reste sind dem Fachmann aus der Polyesterchemie für Diole bzw. Dicarbonsäuren bzw. für deren oben genannte Derivate bekannt.

Beispiele für Diole ohne einen im wesentlichen normalkettigen aliphatischen Rest sind: N,N-Dihydroxyethyl, N-methyl-amin, Ethylenglykol, Diethylenglycol, Tetraethylenglycol, 1,2- und 1,3-Propandiol, 1,4-Butandiol, 1,6-Hexandiol, 1,4-Cyclohexandiol, Brenzkatechin, Resorcin, Hydrochinon, 4,4'-Dihydroxydiphenyl, 4,4'-Dihydroxy-diphenylether, 4,4'-Dihydroxy-benzophenon, 2,2-Bis(4-hydroxyphenyl)-propan ( = Bisphenol A) und araliphatische Diole der folgenden Formeln

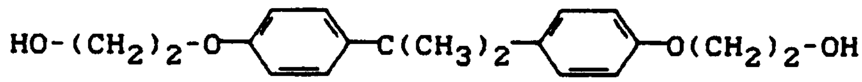

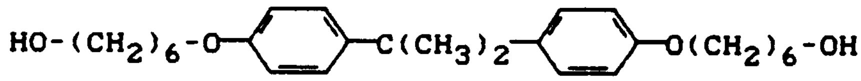

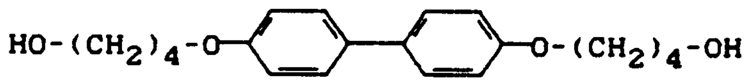

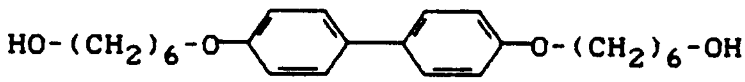

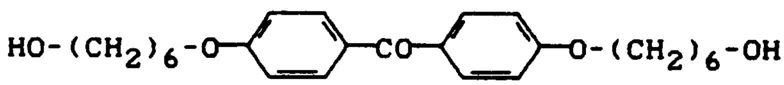

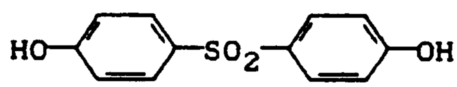

Diese Aufzählung ist keineswegs erschöpfend, sondern nur typisch.

Beispiele für Dicarbonsäuren (in Form der freien Säuren, ihrer Ester oder ihrer Säurehalogenide) ohne einen im wesentlichen normalkettigen aliphatischen Rest sind: Malonsäure, Bernsteinsäure, Glutarsäure, Adipinsäure, Phthalsäure, Terephthalsäure, Isophthalsäure, 4,4'-Diphenyl-dicarbonsäure, 4,4'-Diphenylether-dicarbonsäure und viele andere, wobei auch diese Aufzählung nicht erschöpfend, sondern nur typisch ist.

Die normalkettigen aliphatischen Reste können über eine C-C-Bindung an das Gerüst A oder B gebunden sein. Beispielsweise kann Malonester einfach oder zweifach mit langkettigen Alkylhalogeniden alkyliert werden und als Ester oder Säurechlorid eingesetzt werden. Durch Reduktion, beispielsweise mit $LiAlH_4$, gelangt man von den Malonestern zu den korrespondierenden Diolen (z.B. 2,2-Distearyl-1,3-propandiol).

Aliphatische Teile für A können weiterhin verzweigt sein und 1 bis 3 weitere OH-Gruppen, bevorzugt 1 oder 2 weitere OH-Gruppen tragen, an die der normalkettige aliphatische Rest gebunden ist, so daß letztendlich ein Diol verbleibt. Beispiele für Diole der letztgenannten Art sind: Glycerinmonostearat, Trimethylolpropan-monostearat oder Pentaerythrit-distearat, welche beispielsweise nach Blockieren zweier OH-Gruppen, Umsetzung mit einem langkettigen Carbonsäurechlorid und Abspaltung der Schutzgruppe hergestellt werden können.

Aliphatische Teile für A können weiterhin ein N-Atom enthalten, welches mit Hilfe langkettiger Alkylhalogenide alkyliert oder quaterniert werden kann. In einem solchen Fall ist der normalkettige aliphatische Rest über ein N-Atom an das Gerüst A gebunden. Weiterhin kann der langkettige Rest mit einem solchen N-Atom über eine Carbonylgruppe, eine Sulfonylgruppe, eine 4-Hydroxyphenylcarbonylgruppe oder eine 4-Hydroxyl-phenyl(-naphthyl-, -anthryl-)sulfonylgruppe verbunden sein.

Aromatische Teile für A und lange Reste können in entsprechender Weise über eine C-C-Bindung, ein Ether-O-Atom, eine -CO-Gruppe, eine -O-CO-Gruppe, eine -NH-CO-Gruppe, eine Sulfonylgruppe oder eine Sulfonamidgruppe verbunden sein.

Die beispielhaft genannten Stoffe können formelmäßig wie folgt dargestellt werden:

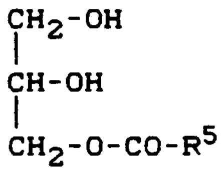

,

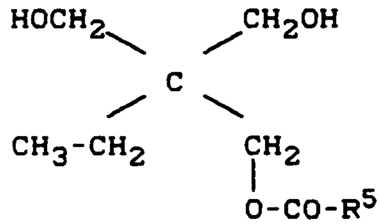

und

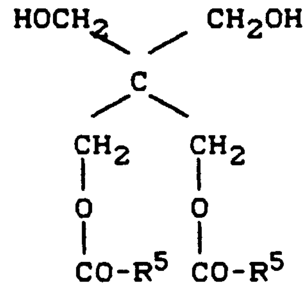

mit

$R^5$ = $C_9H_{19}$, $C_{11}H_{23}$, $C_{13}H_{27}$, $C_{15}H_{31}$, $C_{17}H_{35}$ u.a.;

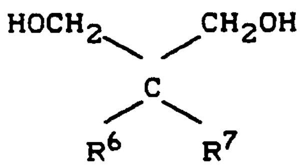

,

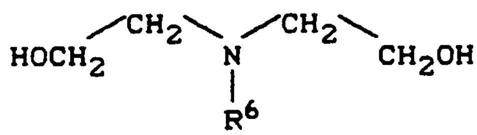

und

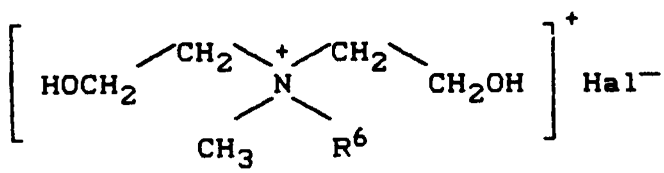

mit

$R^6$ = $R^5$ oder $C_8H_{17}$, $C_{10}H_{21}$, $C_{12}H_{25}$, $C_{14}H_{29}$, $C_{16}H_{33}$, $C_{18}H_{37}$ u.a.,
$R^7$ = H, $R^5$ oder $R^6$ und
$Hal^-$ = $Cl^-$ oder $Br^-$;

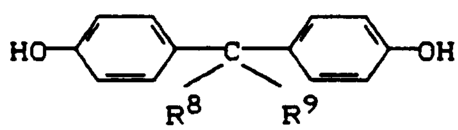

mit

$R^8$ = H, $R^9$ = $C_9H_{19}$
$R^8$-H, $R^9$-$C_{17}H_{35}$
$R^8$ = $CH_3$, $R^9$ = $C_9H_{19}$
$R^8$ = $R^9$ = $C_9H_{19}$
$R^8$ + $R^9$ = -$C_{11}H_{22}$-

(die letzte Verbindung kann aus Cyclododecanon und 2 Mol Phenol hergestellt werden);

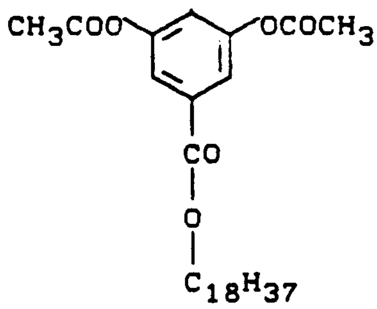

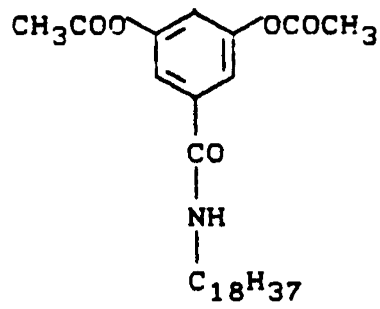

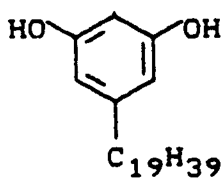

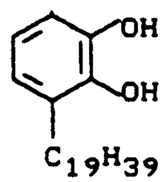

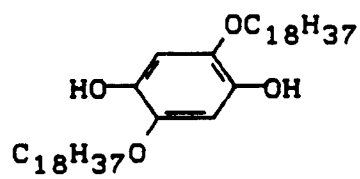

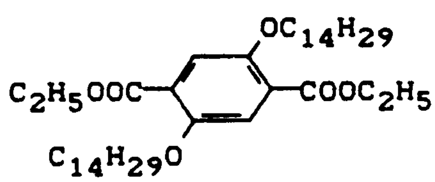

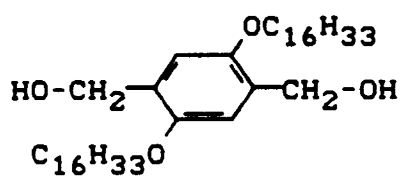

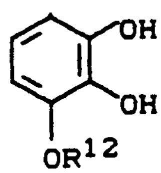

mit
$R^{12}$ = $C_{10}H_{21}$, $C_{14}H_{29}$, $C_{18}H_{37}$ u.a.;

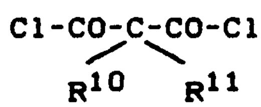

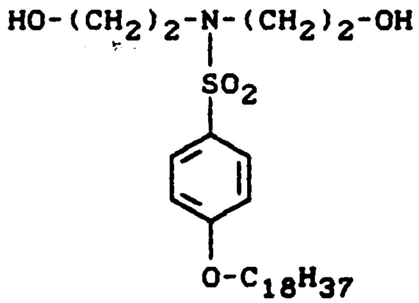

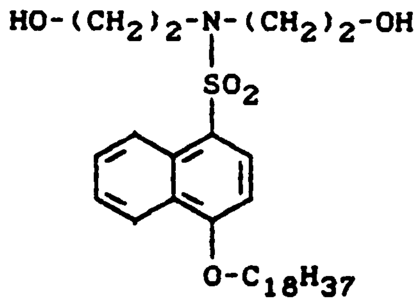

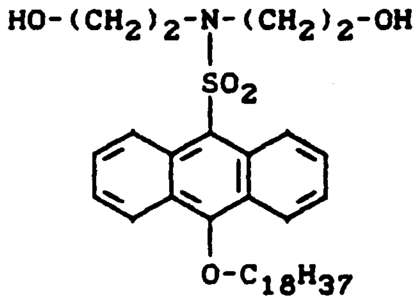

;

mit

$R^{10}$ = H, $R^{11} = C_{18}H_{37}$

$R^{10}$ = $R^{11}$ = $C_{18}H_{37}$

$R^{10}$ = $R^{11}$ = $C_{16}H_{33}$

$R^{10}$ = $R^{11}$ = $C_{8}H_{17}$

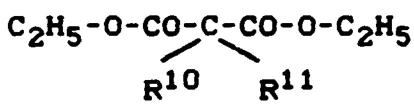

Der Polymerisationsgrad der erfindungsgemäßen Polyester wird durch den Index n mit Werten von 2 bis 80, bevorzugt 2 bis 50, angezeigt. Solche Polyester fallen im allgemeinen als Gemisch mit verschiedenen Polymerisationsgraden an. Diese Gemische können direkt zur Beschichtung fester Träger eingesetzt werden.

Als Substrate für die erfindungsgemäßen beschichteten Träger kommen ebene oder anders gestaltete, vorzugsweise symmetrische dimensionsstabile Werkstücke in Frage. Sie können optisch transparent oder undurchlässig und elektrisch leitend, halbleitend oder isolierend sein.

Beispielsweise kann die Oberfläche eines Substrats ihrerseits aus einem Isolator mit aufgebrachter leitender Metallschicht bestehen oder umgekehrt aus einem Metall und einem Überzug aus einer isolierenden Schicht. Die Oberfläche des Substrats soll zur Erzielung der hohen Ordnung innerhalb der erfindungsgemäßen beschichteten Träger möglichst nur geringe Mikrorauhigkeiten (im Bereich von 20-100 Å nach DIN 4768) aufweisen. Außer der ebenen Form des Substrats kommt beispielsweise die Form von Zylindern oder Halbzylindern sowie von Kugelsegmenten in Frage. Durch physikalische oder chemische Behandlung kann die Oberfläche der Substrate weiterhin hydrophil oder hydrophob eingestellt worden sein. Im allgemeinen werden die Substratoberflächen vor der Beschichtung einer Reinigung unterzogen. Die festen Substrate können sowohl aus anorganischen als auch aus organischen Materialien bestehen. Beispiele für anorganische Materialien sind Metalle und Legierungen, wie Gold, Platin, Nickel, Palladium, Aluminium, Chrom, Stahl u.a. sowie Nichtmetalle oder oxidische Stoffe wie Silicium, Siliciumdioxid, Glas, Graphit, Glimmer und keramische Werkstoffe. Aus der Gruppe der organischen Materialien seien vor allem polymere Werkstoffe, wie Polyester (Polyethylenterephthalat, Polybutylenterephthalat u.a.), Polyvinylchlorid, Polyvinylidenfluorid, Polytetrafluorethylen, Polycarbonat, Polyamid usw. genannt. Der jeweilige Verwendungszweck bestimmt die Auswahl des Substrats. Bei optischen Untersuchungen oder Anwendungen kommen somit beispielsweise transparente oder reflektierende Substrate zum Einsatz. Sind elektrische Eigenschaften von

Interesse, werden metallisierte und dadurch leitende oder halbleitende Substrate (beispielsweise Silicium oder ITO, (ITO = Indium Tin Oxide) oder aber, falls erforderlich, Isolatoren zum Einsatz kommen.

Besonders geeignet sind dimensionsstabile, flache, ebene Substrate wie Filme, Folien, Bänder usw. Die Beschichtung kann einseitig oder beidseitig erfolgen.

Im Rahmen der Langmuir-Blodgett-Technik werden Lösungen der Polyester hergestellt. Als Lösungsmittel kommen Methylenchlorid, Chloroform, Trichlorethan, Benzol, Hexan, Ethylacetat und ähnliche, dem Fachmann bekannte, sowie deren Mischungen in Betracht. Nur in wenigen Fällen muß man stärker polare Lösungsmittel, wie Methanol, Ethanol, Dimethylsulfoxid, Dimethylformamid oder N-Methylpyrrolidon zur Verbesserung der Löslichkeit zusetzen. Die Konzentration solcher Polyester-Lösungen wird im allgemeinen auf $10^{-2}$ bis $10^{-4}$ Mol/l eingestellt. Eine solche Lösung wird auf die Oberfläche einer Flüssigkeit gebracht, in der sich weder der Polyester noch dessen Lösungsmittel lösen. Die wichtigste dieser Flüssigkeiten ist Wasser bzw. wäßrige Lösungen von Salzen, Säuren oder Basen, bevorzugt reines Wasser. Um das Lösungsmittel für die Polyester nicht zu stark im Wasser löslich zu machen, dürfen die obengenannten stärker polaren Lösungsmittel nur in untergeordneten Mengen eingesetzt werden.

Während das Lösungsmittel verdunstet bzw. geringe Mengen des stärker polaren Lösungsmittels vom Wasser aufgenommen werden, spreitet der darin gelöste Polyester und wird mit Hilfe einer beweglichen Barriere bis zum gewünschten Übertragungsdruck komprimiert, so daß eine geschlossene und im molekularen Maßstab geordnete Schicht vorliegt ("quasi-feste" oder "fest-analoge" Phase). Durch Tauchen der Träger erfolgt sodann die Beschichtung in einer so oft wiederholten Form, wie Beschichtungslagen gewünscht werden. Diese Übertragung erfolgt im allgemeinen bei einer Temperatur von 5-35 °C, bevorzugt 10-30 °C.

Die bei Polymeren zu beobachtende statistische Knäuelung der Ketten und andere Unregelmäßigkeiten ließen auch entsprechende Störungen der beschichteten Träger erwarten. Überraschenderweise ist dies bei den erfindungsgemäßen beschichteten Trägern in wesentlich geringerem Maße der Fall, so daß viellagige Beschichtungen mit einem hohen Ordnungsgrad und praktisch gleichen, einstellbaren Schichtdicken erzielt werden.

Beispiele

Ausgangsstoffe und Arbeitsgeräte

Die eingesetzten Polyester wurden auf konventionelle Weise durch Reaktion der Diole bzw. ihrer Diacetate mit den Dicarbonsäuren bzw. ihren Säurechloriden oder ihren Diethylestern erzeugt und durch Umfällen gereinigt. Es handelt sich um die folgenden formelmäßig dargestellten Polyester ("Poly"):

Poly 1

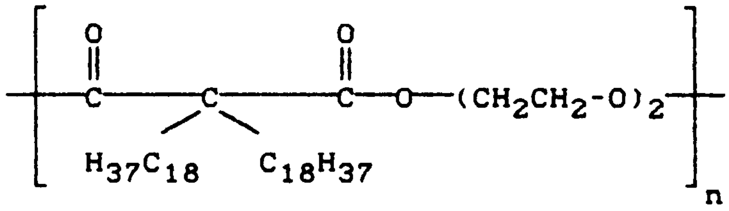

Poly 2

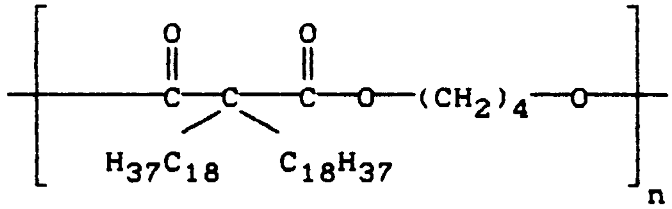

Poly 3

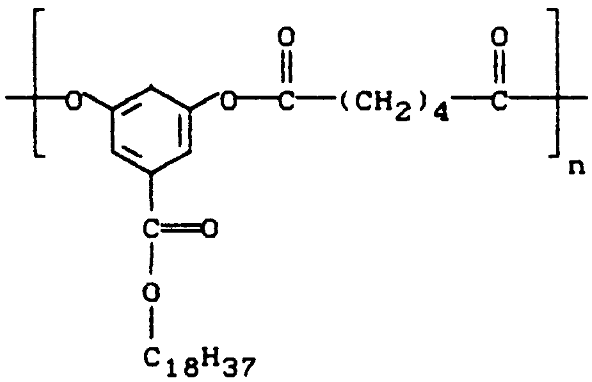

Poly 4

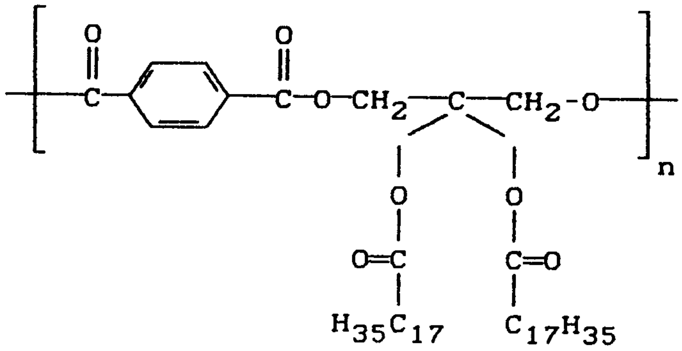

Poly 5

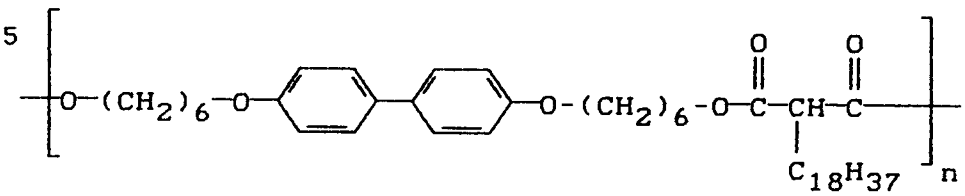

Poly 6

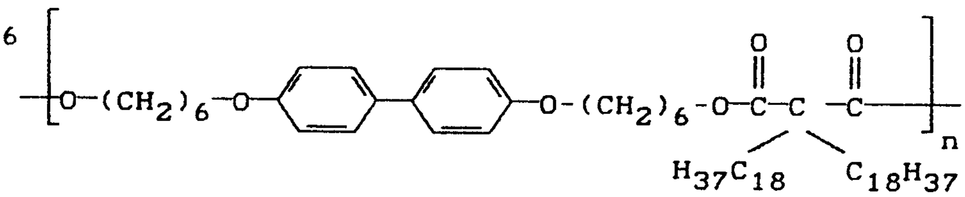

Poly 7

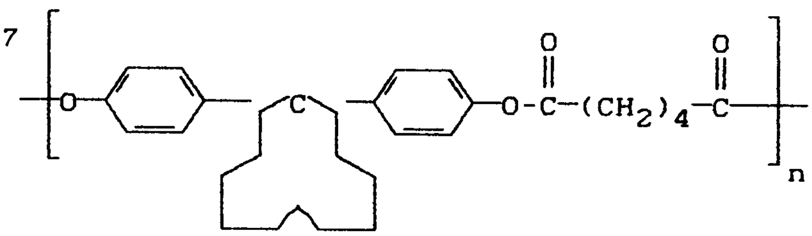

Poly 8

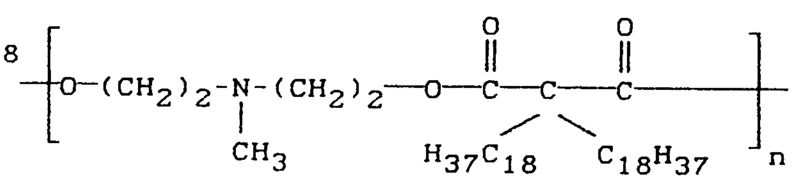

Zur Herstellung der Mono- und Multischichten wurde entweder eine kommerziell erhältliche Filmwaage der Firma KSV Chemicals, Helsinki, oder der Firma MGW Lauda, Lauda-Königshofen, verwendet. Die effektiv nutzbare Trogfläche der KSV-Filmwaage betrug bei der $\pi$/A-Isothermenmessung 1275 und bei Beschichtungsexperimenten 1175 $cm^2$. Die Vorschubgeschwindigkeit der Barriere betrug bei der $\pi$/A-Isothermenmessung 31 mm/min, das entsprach einer Flächenverringerung von 7750 $mm^2$/min; für die Lauda-Filmwaage ergeben sich folgende Werte: Trogfläche 990 $cm^2$, Vorschubgeschwindigkeit 33 mm/min und Flächenverringerung 6600 $mm^2$/min. Beim Aufbau von Multischichten wurde die Barrierengeschwindigkeit jeweils dem Monoschichtverhalten angepaßt. In den Abbildungen 1.1 bis 1.8 sind verschiedene $\pi$/A-Isothermen dargestellt, von denen nur der in Abbildung 1.1 wiedergegebene Verlauf ausführlicher diskutiert wird, da die Ergebnisse direkt auf die übrigen Beispiele übertragen werden können. Abb. 1.1 wurde mit dem Poly 1 aufgenommen, Abb. 1.2 mit Poly 2, Abb. 1.3 mit Poly 3, Abb. 1.4 mit Poly 4, Abb. 1.5 mit Poly 5, Abb. 1.6 mit Poly 6, Abb. 1.7 mit Poly 7 und Abb. 1.8 mit Poly 8.

Zur Aufnahme dieser $\pi$/A-Isotherme wurden 9,63 mg Polyester in 10 ml Chloroform (analysenrein) gelöst (1,42 • $10^{-3}$ Mol/l). Die aufgetragene Menge betrug 50 $\mu$l. Die Messung erfolgte bei Raumtemperatur. Ein merklicher Druckanstieg trat ab etwa 65 $Å^2$/RU (RU = Repeat Unit, Wiederholungseinheit) auf. Der Kollapspunkt lag bei etwa 40 $Å^2$/RU und einem Schub von etwa 50 mN/m.

Der Flächenbedarf von 40 $Å^2$/RU am Kollapspunkt steht in guter Übereinstimmung mit dem aus der Literatur bekannten für zweikettige Amphiphile zu erwartenden Wert, denn der Flächenbedarf einer Alkylkette beträgt 18-20 $Å^2$. Der vermessene Polyester wurde aus dem zugrundeliegenden zweikettigen Diol und dem zugrundeliegenden Dicarbonsäurediethylester erhalten. Man erkennt, daß zum Flächenbedarf praktisch ausschließlich die beiden Alkylketten beitragen. Aus dem Verlauf der $\pi$/A-Isotherme kann daher gefolgert werden, daß das Polymerrückgrat mit seinen polaren Estergruppen flach auf der Wasseroberfläche liegt und die unpolaren Alkylseitenketten in den Gasraum ragen. Die Orientierung der hydrophilen und der hydrophoben Gruppen ist also auch dann, wenn sie in einen Polyester eingebaut sind, mit dem der klassischen Amphiphile wie langkettigen Fettsäuren oder Alkoholen direkt vergleichbar.

Als reflektierendes Substrat für optische Untersuchungen diente einseitig mit Al besputterte Polycarbonat(PC)-Folie (Dicke 500 $\mu$m, Rauhtiefe Ra ≦ 70Å). Die Dicke der Al-Schicht betrug ca. 660 Å, densitometrische Messungen der optische Dichte ergaben einen Wert von 3,54. Vor der Metallisierung wurde die Oberfläche 5 Minuten lang einer Gleichspannungs-Glimmentladung ($O_2$-Partialdruck 2•$10^{-2}$ mbar, Leistung ca. 60 W) ausgesetzt.

Für die Strukturuntersuchungen mittels Röntgenbeugung diente als Substrat Silicium (Wacker-Chemitronic). Aus ca. 380 $\mu$m dicken, einseitig polierten Scheiben (20Å≦Ra≦40Å, Orientierung (111), Durchmesser 76,2 mm (3 Zoll)) wurden Plättchen von 76 mm Länge und 26 mm Breite herausgeschnitten und unmittelbar vor der Beschichtung im Ultraschallbad von Staub und chemischen Kontaminationen gereinigt.

Eine Abmusterung der Oberflächen der Schichten auf der metallbedampften Seite des PC-Substrats bzw. auf der polierten Seite des Si-Substrats mit Interferenzkontrast-Mikroskopie (Vergrößerung 100- bis 500-fach) zeigte sehr glatte, homogene Oberflächen; vereinzelt auftretende Defekte sind auf Folienfehler bzw. auf Beschädigungen des Si-Substrates, die beim Schneiden entstanden sind, und auf Staub zurückzuführen.

Die Dicke der Multischichten auf der metallbedampften Seite des PC-Substrats wurde punktweise ellipsometrisch bei einer Wellenlänge von 632,8 nm (He-Ne-Laser) bestimmt (Gerät: Rudolf Research, Typ Auto-EL); der Einfallwinkel betrug 70°, der Durchmesser des Meßflecks ca. 1 mm. Pro Multischicht wurde über 15 bis 25 Einzelmessungen (Schrittweite 2,54 bis 1,27 mm (1/10 bis 1/20 Zoll) mit Mikroschlitten) gemittelt; der maximale experimentelle Fehler betrug ± 0,5 Å.

Aus den Ellipsometerwinkeln $\gamma$ und $\Delta$ des Gesamtsystems (Träger und Beschichtung) und des unbeschichteten Trägers wurden die entsprechenden Winkelwerte der Schicht berechnet und daraus die Gesamtschichtdicke bestimmt.

Abbildung 2 gibt das Ergebnis einer punktweisen ellipsometrischen Schichtdickenbestimmung an einer Probe aus Verbindung 1 mit Bereichen wieder, die unterschiedlich oft (10 mal, 20 mal, 30 mal und 40 mal) getaucht wurden, d.h. mit Bereichen, die aus Stapeln von 10, 20, 30 und 40 Einzelschichten des Poly 1 bestehen. Es besteht ein linearer Zusammenhang zwischen der Gesamtbeschichtungsdicke und der Anzahl der Tauchzyklen. Damit ist bewiesen, daß jede Einzelschicht des Polyesters den gleichen Beitrag zur Gesamtschichtdicke liefert, d.h. das beim Aufbau der Multischichten Schicht für Schicht in gleicher Weise und reproduzierbar übertragen wird, was Voraussetzung für ein wohlgeordnetes Molekülorganisat ist. Die mittlere Dicke $d_o$ einer Einzelschicht ergibt sich aus der Steigung der Geraden in Abb. 2 ($d_o$ ist gleich Filmdicke, dividiert durch Anzahl der Schichten). Sie beträgt 23,8 ± 1,4 Å (Fehlergrenzen: Standardabweichung von 0,9 Å plus experimentellem Fehler von maximal 0,5 Å) und steht in guter Übereinstimmung mit Literaturwerten für strukturell verwandte zweikettige Phospholipide.

Die Struktur der Multischichten auf der polierten Seite des Si-Substrates wurde mittels Röntgenbeugung untersucht. Eingesetzt wurde ein gravitationssymmetrisches Röntgendiffraktometer (Seifert, Typ GSD) mit Cu-$K_{\alpha 1}$-Strahlung ($\lambda$ = 1,5405 Å). Die Beugungsdiagramme wurden nur im Vorstrahlbereich $2° < 2\theta < 15°$ aufgenommen; in diesem Bereich treten noch keine Si-Reflexe auf, was durch eigene Röntgenbeugungs-Experimente am unbeschichteten Si-Substrat bestätigt wurde.

Die Messungen erfolgten in Reflexion; die Probe war so angeordnet, daß der Streuvektor senkrecht zur Schichtebene der Multischichten orientiert war, daher waren nur Reflexe mit den allgemeinen Miller-Indices n•(001) (n ist eine positive ganze Zahl) zu erwarten. Abbildung 3 zeigt das so gemessene Röntgenbeugungsdiagramm für 20 Schichten des Poly 1. Es ist deutlich ein Reflex bei $2\theta = 5{,}7°$ zu erkennen, der einem Netzebenenabstand $d_{ool}$ = 15,5Å (allg.: Braggsche Gleichung $d_{ool} = l \cdot \lambda / 2 \sin\theta$; $\lambda$ = Wellenlänge der Röntgenstrahlung) entspricht. Seine relativ geringe Intensität ist auf die geringe Anzahl der Einzelschichten und auf den niedrigen Atomformfaktor der beteiligten Atome (dieser ist propertional zur Anzahl

der Elektronen des streuenden Atoms, also maximal 8 bei Sauerstoff) zurückzuführen.

Von der Kettenstruktur her nahe verwandte Substanzen, wie ß-Stearinsäure (ASTM Karte Nr. 9-622) und Behensäure (ASTM Karte Nr. 29-1561) haben bei d-Werten von 14,6 Å bzw. 15,9 Å einen isolierten relativ intensiven (003)-Reflex. Unter der Annahme, daß es sich bei dem beobachteten Reflex um den (003)-Reflex handelt, erhält man für den Schichtabstand $C_o$ ($d_{ool}$•l = $C_o$), der der Dicke einer Doppelschicht entspricht (Y-Prozeß), den Wert von 46,5 Å ± 1Å, d.h. die Dicke einer Einzelschicht beträgt 23,3 Å ± 1 Å. Dies steht in sehr guter Übereinstimmung mit dem ellipsometrisch ermittelten Wert.

Damit wurde nicht nur bewiesen, daß die aus dem Polyester aufgebauten Multischichten Schicht für Schicht reproduzierbar auf feste Träger übertragbar sind, sondern zusätzlich, daß auch die molekulare Ordnung polymerisierter, in eine fest-analoge Phase komprimierter Moleküle erhalten bleibt. Aus der Literatur sind derartige Strukturuntersuchungen an Polymeren der in dieser Anmeldung beschriebenen Art nicht bekannt.

## Patentansprüche

**1.** Nach der Langmuir-Blodgett-Technik hergestellte beschichtete Träger mit ultradünner, mehrlagiger Beschichtung mit 10 - 40 Einzellagen aus organischem Polymermaterial, dadurch gekennzeichnet, daß als Polymer ein Polyester der Struktur

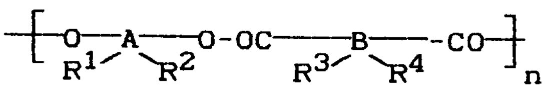

eingesetzt wird, worin

A das Gerüst eines aliphatischen, araliphatischen oder aromatischen Diols ist,

B das Gerüst einer aliphatischen, araliphatischen oder aromatischen Dicarbonsäure ist,

n Werte von 2 bis 80 annimmt und

mindestens einer der Substituenten $R^1$ bis $R^4$ einen normalkettigen aliphatischen Rest darstellt und jeweils die anderen Wasserstoff oder Methyl bedeuten, wobei der aliphatische Rest mindestens 8 C-Atome aufweist und die Anbindung der normalkettiger aliphatischen Reste an das Gerüst A bzw. B auch über Heteroatome enthaltende Gruppen erfolgen kann, wobei im Falle zweier normalkettigen aliphatischer Reste an einem Gerüst diese gleich sind, wobei der Begriff normalkettig einen Verzweigungsgrad von maximal einer Methylgruppe pro 8 C-Atomen in der Kette umfaßt, und wobei ferner $R^1$ und $R^2$ gemeinsam und $R^3$ und $R^4$ gemeinsam eine Alkylenkette bilden können, mit Ausnahme von Polyestern der Formel

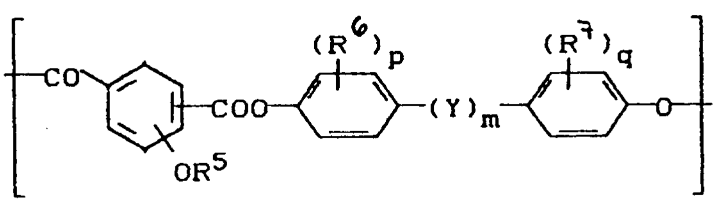 (IV),

in der

| | |
|---|---|
| $R^5$ | für $C_1$-$C_{30}$-Alkyl steht, |
| $R^6$ und $R^7$ | Halogen oder $C_1$-$C_4$-Hydrocarbyl bedeuten, |
| Y | für -O-, -S-, -$SO_2$-, -CO-, $C_1$-$C_8$-Alkylen oder $C_1$-$C_8$-Alkyliden steht, |
| p und q | Null bis Vier bedeuten, |
| m | Null oder Eins bedeutet und |

die beiden CO-Gruppen meta- und para-ständig zueinander sind.

**2.** Beschichtete Träger nach Anspruch 1, dadurch gekennzeichnet, daß die normalkettigen aliphatischen Reste 8-32 C-Atome, bevorzugt 8-28 C-Atome, besonders bevorzugt 8-22 C-Atome aufweisen.

**3.** Beschichtete Träger nach Anspruch 1, dadurch gekennzeichnet, daß die Struktureinheit der Polyester 1 oder 2 normalkettige aliphatische Reste trägt.

4. Beschichtete Träger nach Anspruch 3, dadurch gekennzeichnet, daß die Struktureinheit der Polyester zwei normalkettige aliphatischen Reste trägt, die beide entweder mit dem Gerüst A oder mit dem Gerüst B verbunden sind.

5. Beschichtete Träger nach Anspruch 3, dadurch gekennzeichnet, daß das Gerüst des Diols (Gerüst A) ein oder zwei normalkettige aliphatische Reste trägt.

6. Beschichtete Träger nach Anspruch 1, dadurch gekennzeichnet, daß die Substituenten $R^1$ bis $R^4$ strikt normalkettig sind.

7. Beschichtete Träger nach Anspruch 1, dadurch gekennzeichnet, daß als Polyester ein Gemisch mehrerer mit verschiedenen Werten von n eingesetzt wird.

8. Verfahren zur Herstellung von beschichteten Trägern mit ultradünner, mehrlagiger Beschichtung mit 10 bis 40 Einzellagen aus einem organischen Polymermaterial, dadurch gekennzeichnet, daß man eine Lösung eines Polyesters der Struktur

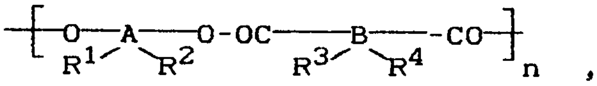

in der

A das Gerüst eines aliphatischen, araliphatischen oder aromatischen Diols ist,
B das Gerüst einer aliphatischen, araliphatischen oder aromatischen Dicarbonsäure ist,
n Werte von 2 bis 80 annimmt und

mindestens einer der Substituenten $R^1$ bis $R^4$ einen normalkettigen aliphatischen Rest darstellt und die jeweils anderen Wasserstoff oder Methyl bedeuten, wobei der aliphatische Rest mindestens 8 C-Atome aufweist und die Anbindung der normalkettigen aliphatischen Reste an das Gerüst A bzw. B auch über Heteroatome enthaltende Gruppen erfolgen kann, wobei im Falle zweier normalkettiger Reste an einem Gerüst diese gleich sind, wobei der Begriff normalkettig einen Verzweigungsgrad von maximal einer Methylgruppe pro 8 C-Atomen in der Kette umfaßt, und wobei ferner $R^1$ und $R^2$ gemeinsam und $R^3$ und $R^4$ gemeinsam eine Alkylenkette bilden können, mit Ausnahme von Polyestern der Formel

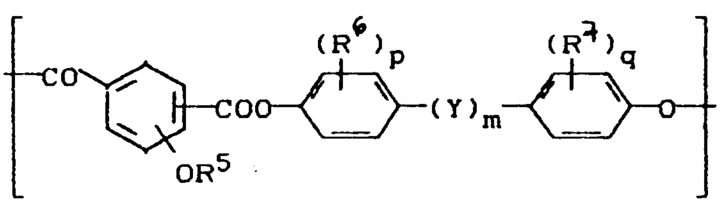
(IV),

in der

$R^5$ für $C_1$-$C_{30}$-Alkyl steht,
$R^6$ und $R^7$ Halogen oder $C_1$-$C_4$-Hydrocarbyl bedeuten,
Y für -O-, -S-, $-SO_2-$, -CO-, $C_1$-$C_8$-Alkylen oder $C_1$-$C_8$-Alkyliden steht,
p und q Null bis Vier bedeuten,
m Null oder Eins bedeutet und

die beiden CO-Gruppen meta- und para-ständig zueinander sind, auf die Oberfläche einer Flüssigkeit, in der sich weder der Polyester noch dessen Lösungsmittel lösen, bringt und ein Substrat nach der Langmuir-Blodgett-Technik mit der gewünschten Anzahl von Beschichtungslagen versieht.

9. Verfahren zur Herstellung von beschichteten Trägern nach Anspruch 8, dadurch gekennzeichnet, daß die Flüssigkeit, in der sich weder der Polyester noch dessen Lösungsmittel lösen, Wasser ist.

## Claims

1. Coated substances prepared by the Langmuir-Blodgett technique and having an ultrathin multilayer coating with 10-40 individual layers of organic polymer material, characterized in that the polymer used is a polyester of the structure

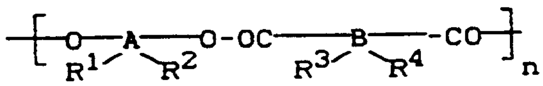

wherein

- A is the skeleton of an aliphatic, araliphatic or aromatic diol,
- B is the skeleton of an aliphatic, araliphatic or aromatic dicarboxylic acid,
- n assumes values from 2 to 80 and

at least one of the substituents $R^1$ to $R^4$ represents an aliphatic radical having a normal chain and each of the other radicals denotes hydrogen or methyl, the aliphatic radical having at least 8 C atoms and it being possible for bonding of the aliphatic radicals having a normal chain to the skeleton A or B also to take place via groups containing heteroatoms, and, where there are two aliphatic radicals having a normal chain on one skeleton, these radicals are identical, the term having a normal chain including a degree of branching of not more than one methyl group per 8 C atoms in the chain, and furthermore $R^1$ and $R^2$ together and $R^3$ and $R^4$ together may form an alkylene chain, with the exception of polyesters of the formula in which

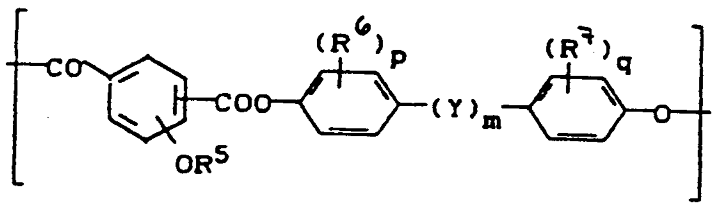

(IV),

$R^5$ represents $C_1$-$C_{30}$-alkyl,
$R^6$ and $R^7$ denote halogen or $C_1$-$C_4$-hydrocarbyl,
Y represents -O-, -S-, $-SO_2-$, -CO-, $C_1$-$C_8$-alkylene, or $C_1$-$C_8$-alkylidene,
p and q denote zero to four,
m denotes zero or one and
the two CO groups are meta and para to one another.

2. Coated substances according to Claim 1, characterized in that the aliphatic radicals which have a normal chain possess 8-32 C atoms, preferably 8-28 C atoms, particularly preferably 8-22 C atoms.

3. Coated substances according to Claim 1, characterized in that the structural unit of the polyester carries 1 or 2 aliphatic radicals having a normal chain.

4. Coated substances according to Claim 3, characterized in that the structural unit of the polyester carries two aliphatic radicals which have a normal chain and both of which are bonded either to the skeleton A or to the skeleton B.

5. Coated substances according to Claim 3, characterized in that the skeleton of the diol (skeleton A) carries one or two aliphatic radicals having a normal chain.

6. Coated substances according to Claim 1, characterized in that the substituents $R^1$ to $R^4$ have a strictly normal chain.

7. Coated substrates according to Claim 1, characterized in that a mixture of several polyesters having different values of n is used as the polyester.

**8.** Process for the production of coated substrates having an ultrathin multilayer coating with 10 to 40 individual layers of an organic polymer material, characterized in that a solution of a polyester of the structure

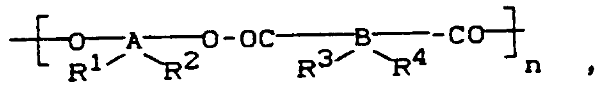

wherein

A is the skeleton of an aliphatic, araliphatic or aromatic diol,

B is the skeleton of an aliphatic, araliphatic or aromatic dicarboxylic acid,

n assumes values from 2 to 80 and

at least one of the substituents $R^1$ to $R^4$ represents an aliphatic radical having a normal chain and each of the other radicals denotes hydrogen or methyl, the aliphatic radical having at least 8 C atoms and it being possible for bonding of the aliphatic radicals having a normal chain to the skeleton A or B also to take place via groups containing heteroatoms, and, where there are two aliphatic radicals having a normal chain on one skeleton, these radicals are identical, the term having a normal chain including a degree of branching of not more than one methyl group per 8 C atoms in the chain, and furthermore $R^1$ and $R^2$ together $R^3$ and $R^4$ together may form an alkylene chain, with the exception of polyesters of the formula in which

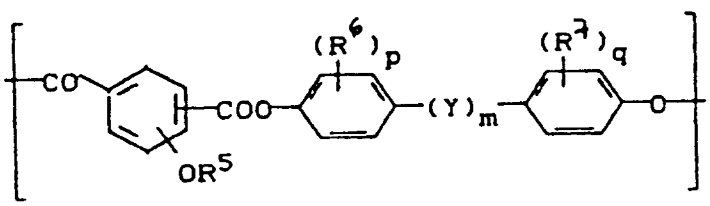

(IV),

$R^5$ represents $C_1$-$C_{30}$-alkyl,

$R^6$ and $R^7$ denote halogen or $C_1$-$C_4$-hydrocarbyl,

Y represents -O-, -S-, $-SO_2-$, -CO-, $C_1$-$C_8$-alkylene, or $C_1$-$C_8$-alkylidene,

p and q denote zero to four,

m denotes zero or one and

the two CO groups are meta and para to one another, is introduced onto the surface of a liquid in which neither the polyester nor its solvent dissolves, and a substrate is provided with the desired number of coating layers by the Langmuir-Blodgett technique.

**9.** Process for the production of coated substrates, according to Claim 8, characterized in that the liquid in which neither the polyester nor its solvent dissolves is water.

**Revendications**

**1.** Supports enduits préparés conformément à la technique de Langmuir-Blodgett, comportant un revêtement multicouche ultrafin comprenant 10-40 couches individuelles en une matière polymère organique, caractérisés en ce que, comme polymère, on met en oeuvre un polyester répondant à la structure

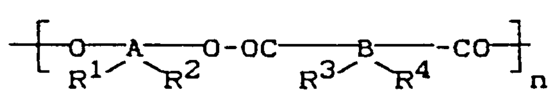

dans laquelle

A représente le squelette d'un diol aliphatique, araliphatique ou aromatique,

B représente le squelette d'un acide dicarboxylique aliphatique, araliphatique ou aromatique,

n prend des valeurs de 2 à 80, et

au moins un des substituants $R^1$ à $R^4$ représente un radical aliphatique à chaîne normale et, respectivement, les autres représentent un atome d'hydrogène ou un groupe méthyle, le radical aliphatique présentant au moins 8 atomes de carbone et la liaison des radicaux aliphatiques à chaîne normale au squelette A, respectivement B, pouvant également avoir lieu à l'intervention de groupes contenant des hétéroatomes, dans lesquels, dans le cas de deux radicaux aliphatiques à chaînes normales sur un squelette, ces derniers sont égaux, l'expression "à chaîne normale" englobant un degré de ramification de maximum un groupe méthyle par 8 atomes de carbone, et dans lesquels, en outre, $R^1$ et $R^2$ peuvent former ensemble, et $R^3$ et $R^4$ peuvent former ensemble une chaîne alkylène, à l'exception des polyesters répondant à la formule

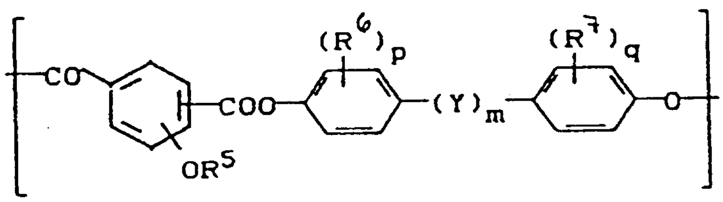

(IV)

dans laquelle

| | |
|---|---|
| $R^5$ | représente un groupe alkyle en $C_1$-$C_{30}$, |
| $R^6$ et $R^7$ | représentent un atome d'halogène ou un groupe hydrocarbyle en $C_1$-$C_4$, |
| Y | représente -O-, -S-, $-SO_2-$, -CO-, un groupe alkylène en |
| p et q | représentent de zéro à quatre, |
| m | représente zéro ou un, et |

les deux groupes CO se trouvant en positions mutuelles méta et para.

2. Supports enduits selon la revendication 1, caractérisés en ce que les radicaux aliphatiques à chaînes normales présentent de 8 à 32 atomes de carbone, de préférence de 8 à 28 atomes de carbone, de manière particulièrement préférée de 8 à 22 atomes de carbone.

3. Supports enduits selon la revendication 1, caractérisés en ce que l'unité de structure des polyesters porte un ou deux radicaux aliphatiques à chaînes normales.

4. Supports enduits selon la revendication 3, caractérisés en ce que l'unité de structure des polyesters porte deux radicaux aliphatiques à chaîne normale, les deux étant reliés, soit au squelette A, soit au squelette B.

5. Supports enduits selon la revendication 3, caractérisés en ce que le squelette du diol (squelette A) porte un ou deux radicaux aliphatiques à chaîne normale.

6. Supports enduits selon la revendication 1, caractérisés en ce que les substituants $R^1$ à $R^4$ sont strictement à chaînes normales.

7. Supports enduits selon la revendication 1, caractérisés en ce que, comme polyester, on met en oeuvre un mélange de plusieurs polyesters, avec diverses valeurs de n.

8. Procédé de préparation de supports enduits comportant un revêtment ultrafin multicouche comprenant de 10 à 40 couches individuelles en une matière polymère organique, caractérisée en ce qu'on amène à la surface d'un liquide dans lequel ne se dissolvent ni le polyester ni son solvant, une solution d'un polyester de structure

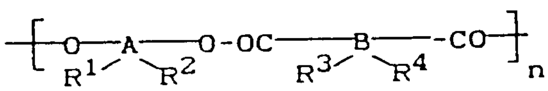

dans laquelle

A représente le squelette d'un diol aliphatique, araliphatique ou aromatique,

B représente le squelette d'un acide dicarboxylique aliphatique, araliphatique ou aromatique,

n prend des valeurs de 2 à 80, et

au moins un des substituants $R^1$ à $R^4$ représente un radical aliphatique à chaîne normale et, respectivement, les autres représentent un atome d'hydrogène ou un groupe méthyle, le radical aliphatique présentant au moins 8 atomes de carbone et la liaison des radicaux aliphatiques à chaîne normale au squelette A, respectivement B, pouvant également avoir lieu à l'intervention de groupes contenant des hétéroatomes, dans lesquels, dans le cas de deux radicaux aliphatiques à chaînes normales sur un squelette, ces derniers sont égaux, l'expression "à chaîne normale" englobant un degré de ramification de maximum un groupe méthyle par 8 atomes de carbone, et dans lesquels, en outre, $R^1$ et $R^2$ peuvent former ensemble, et $R^3$ et $R^4$ peuvent former ensemble une chaîne alkylène, à l'exception de polyesters répondant à la formule

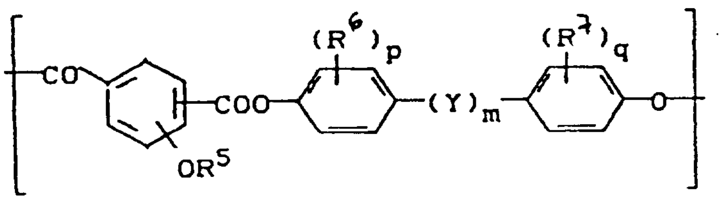

(IV)

dans laquelle

$R^5$ représente un groupe alkyle en $C_1$-$C_{30}$,

$R^6$ et $R^7$ représentent un atome d'halogène ou un groupe hydrocarbyle en $C_1$-$C_4$,

Y représente -O-, -S-, $-SO_2-$, -CO-, un groupe alkylène en $C_1$-$C_8$ ou un groupe alkylidène en $C_1$-$C_8$,

p et q représentent de zéro à quatre,

m représente zéro ou un, et

les deux groupes CO se trouvant en positions mutuelles méta et para, et on enduit un substrat conformément à la technique de Langmuir-Blodgett avec le nombre désiré de couches d'enduction.

**9.** Procédé pour la préparation de supports enduits selon la revendication 8, caractérisé en ce que le liquide dans lequel ne se dissolvent ni le polyester ni son solvant, est l'eau.

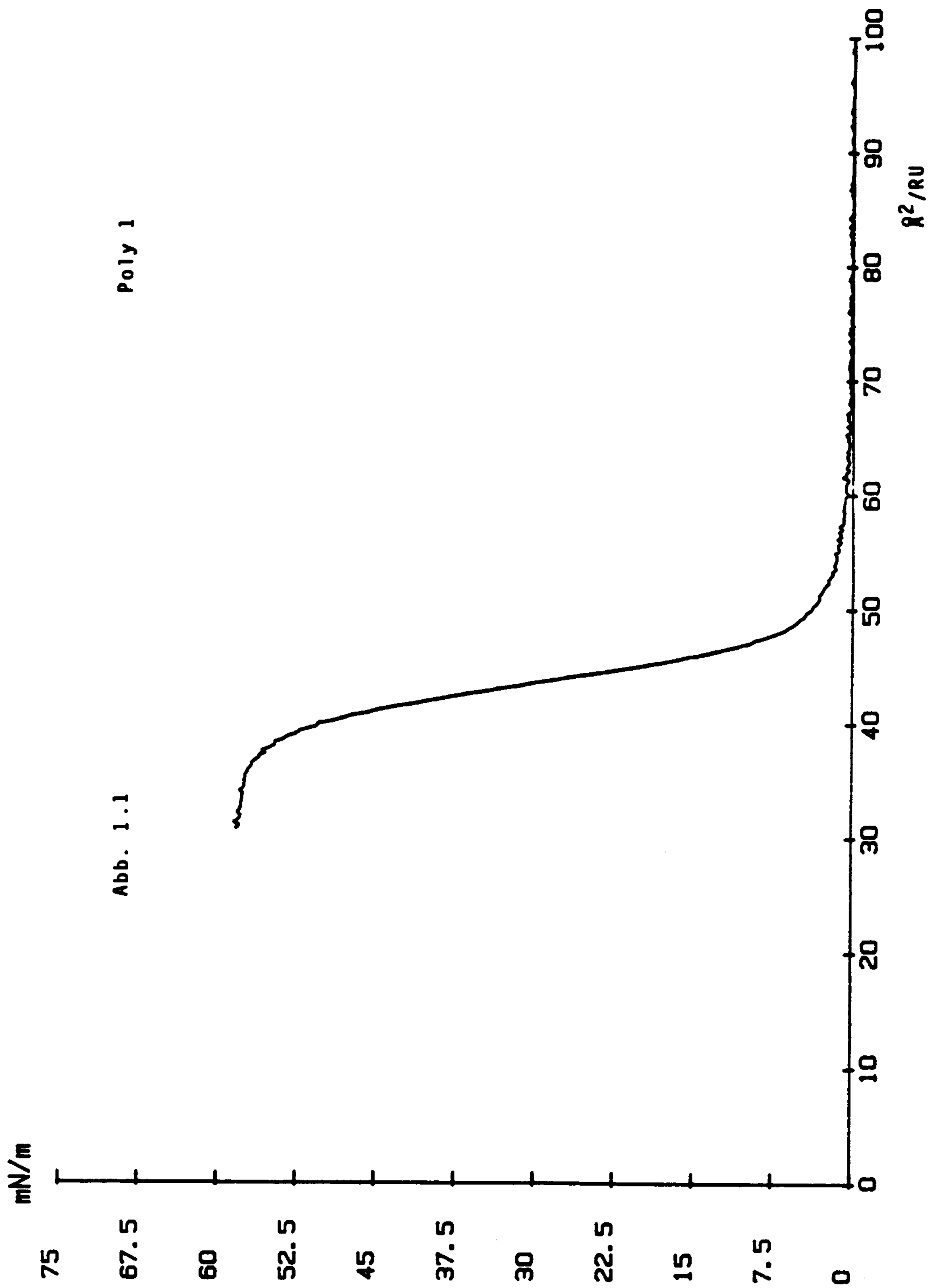
Abb. 1.1
Poly 1
mN/m
75
67.5
60
52.5
45
37.5
30
22.5
15
7.5
0
0
10
20
30
40
50
60
70
80
90
100
Å²/RU

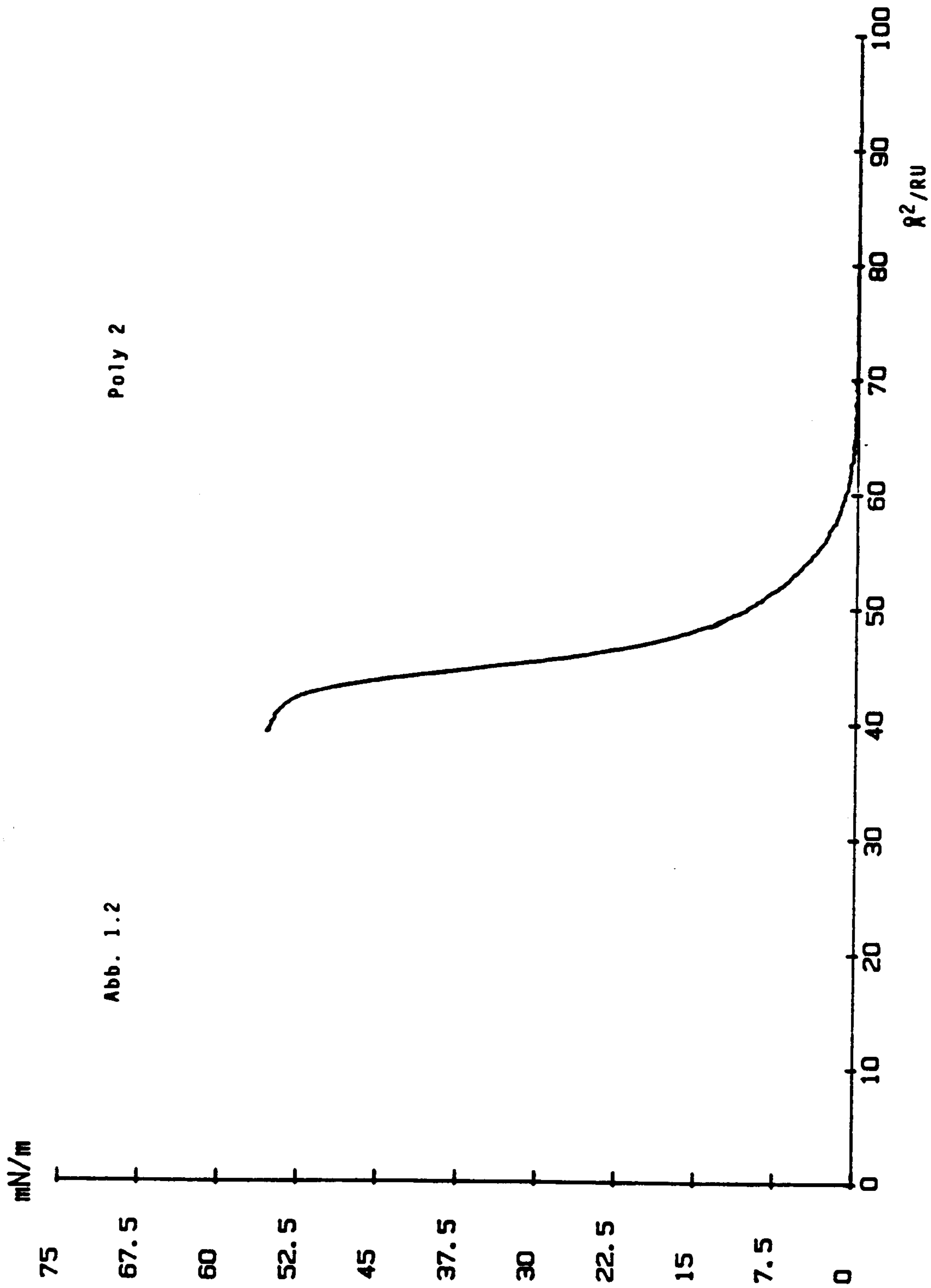
Abb. 1.2
Poly 2
mN/m
75
67.5
60
52.5
45
37.5
30
22.5
15
7.5
0
0
10
20
30
40
50
60
70
80
90
100
Å²/RU

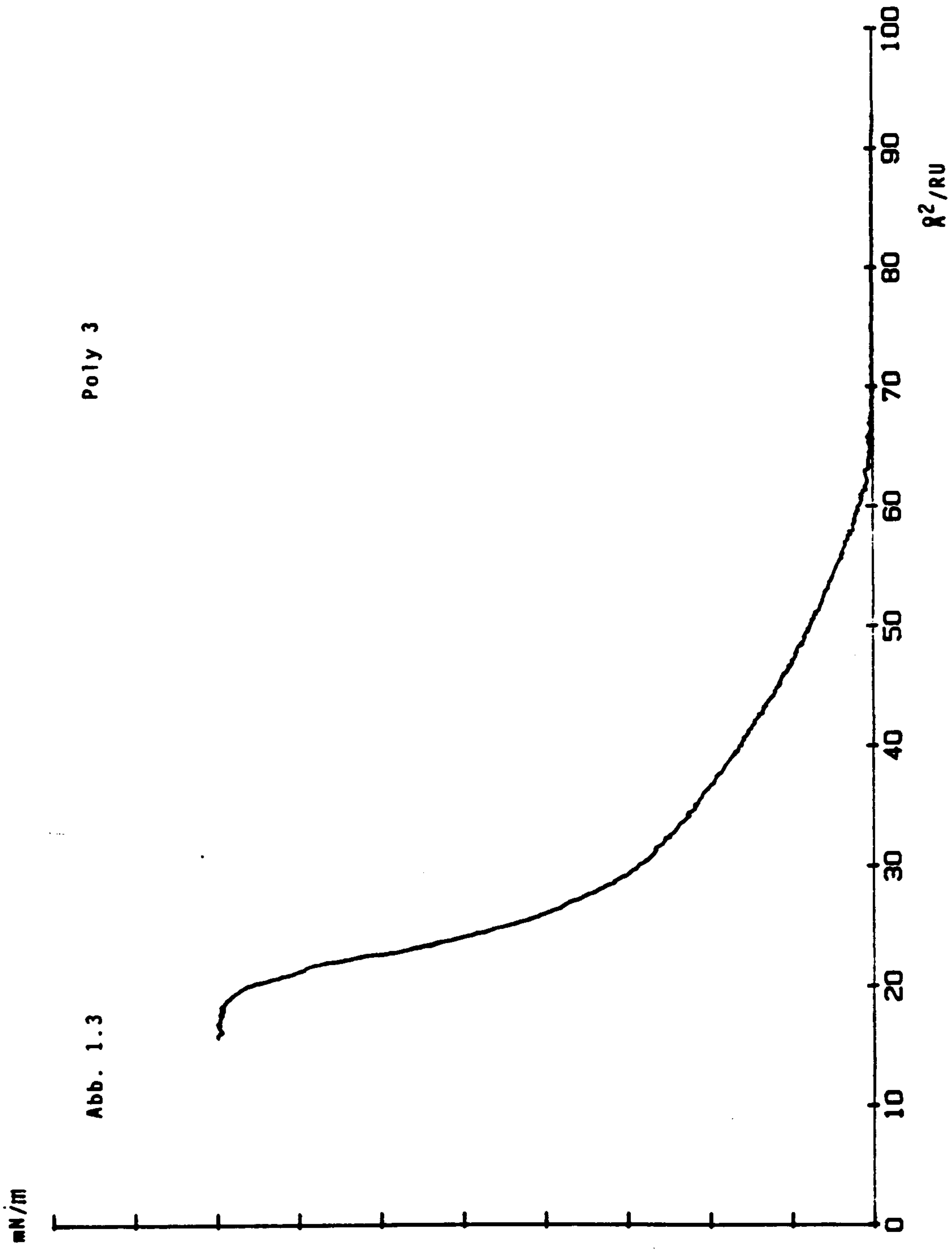
Abb. 1.3
Poly 3
mN/m
75.0
67.5
60.0
52.5
45.0
37.5
30.0
22.5
15.0
7.5
0
0
10
20
30
40
50
60
70
80
90
100
Å²/RU

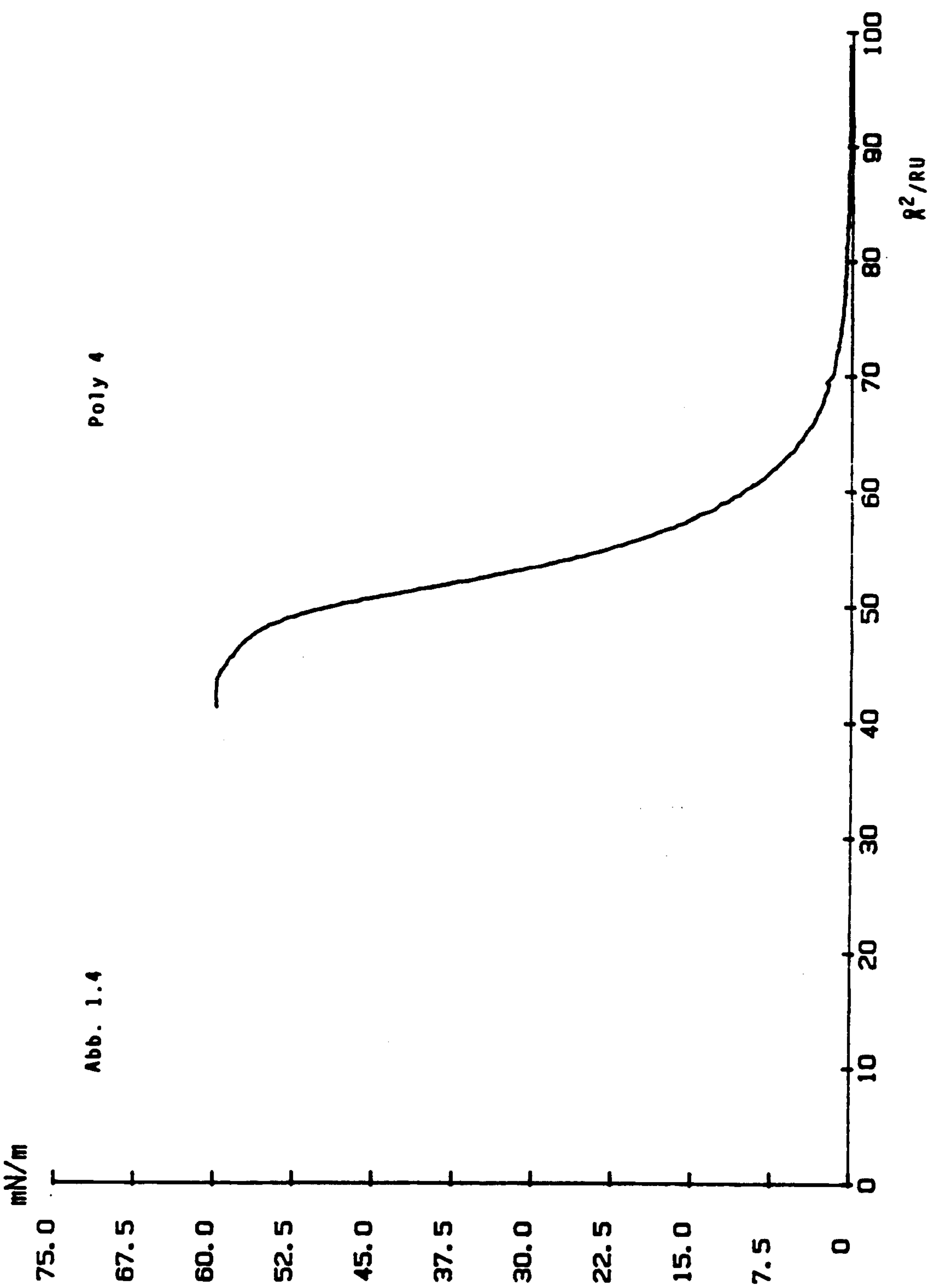
Abb. 1.4
Poly 4
mN/m
75.0
67.5
60.0
52.5
45.0
37.5
30.0
22.5
15.0
7.5
0
0
10
20
30
40
50
60
70
80
90
100
Å²/RU

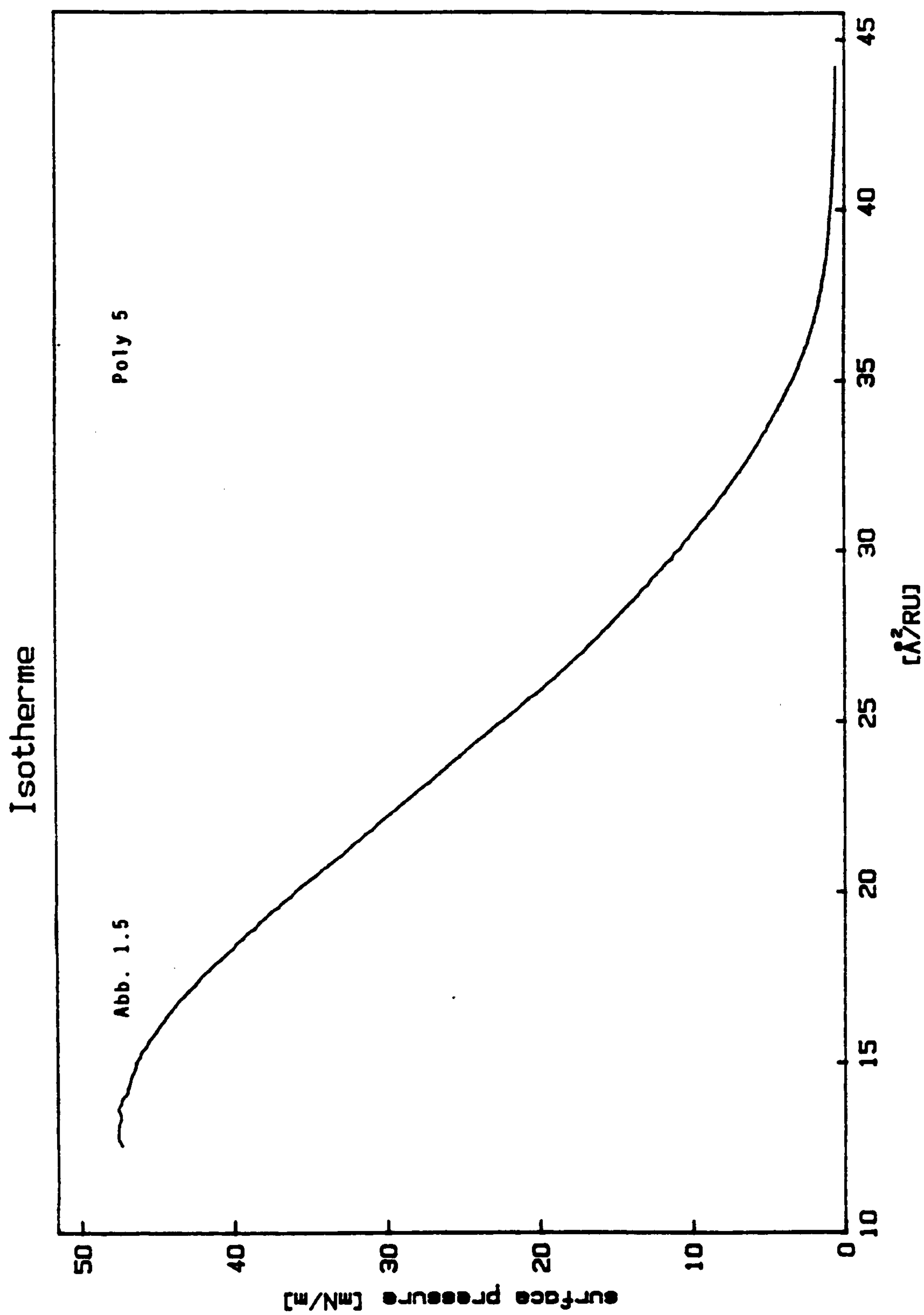
Isotherme
Abb. 1.5
Poly 5
surface pressure [mN/m]
0
10
20
30
40
50
[Å²/RU]
10
15
20
25
30
35
40
45

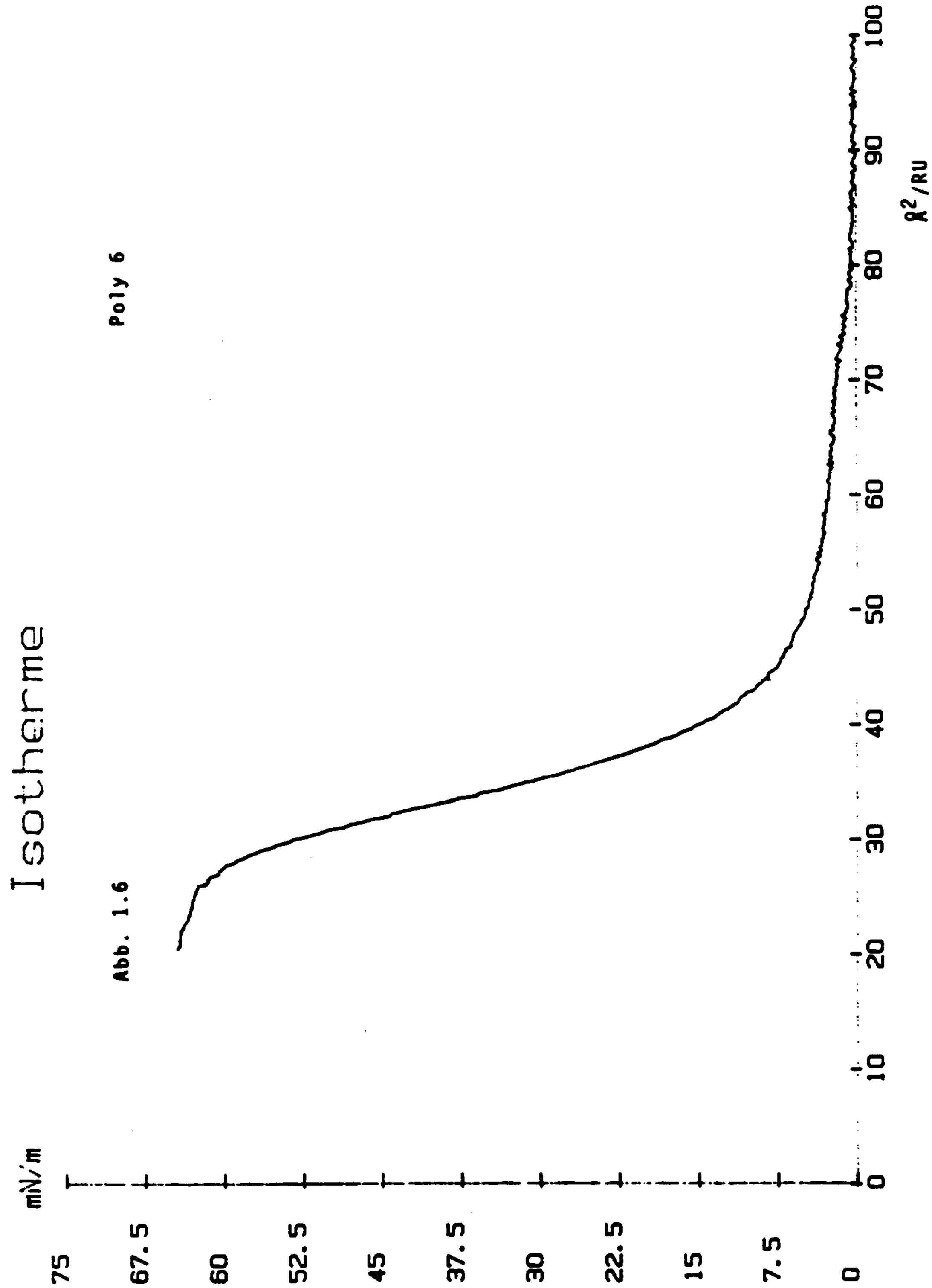
Isotherme
Abb. 1.6
Poly 6
mN/m
75
67.5
60
52.5
45
37.5
30
22.5
15
7.5
0
0
10
20
30
40
50
60
70
80
90
100
$Å^2$/RU

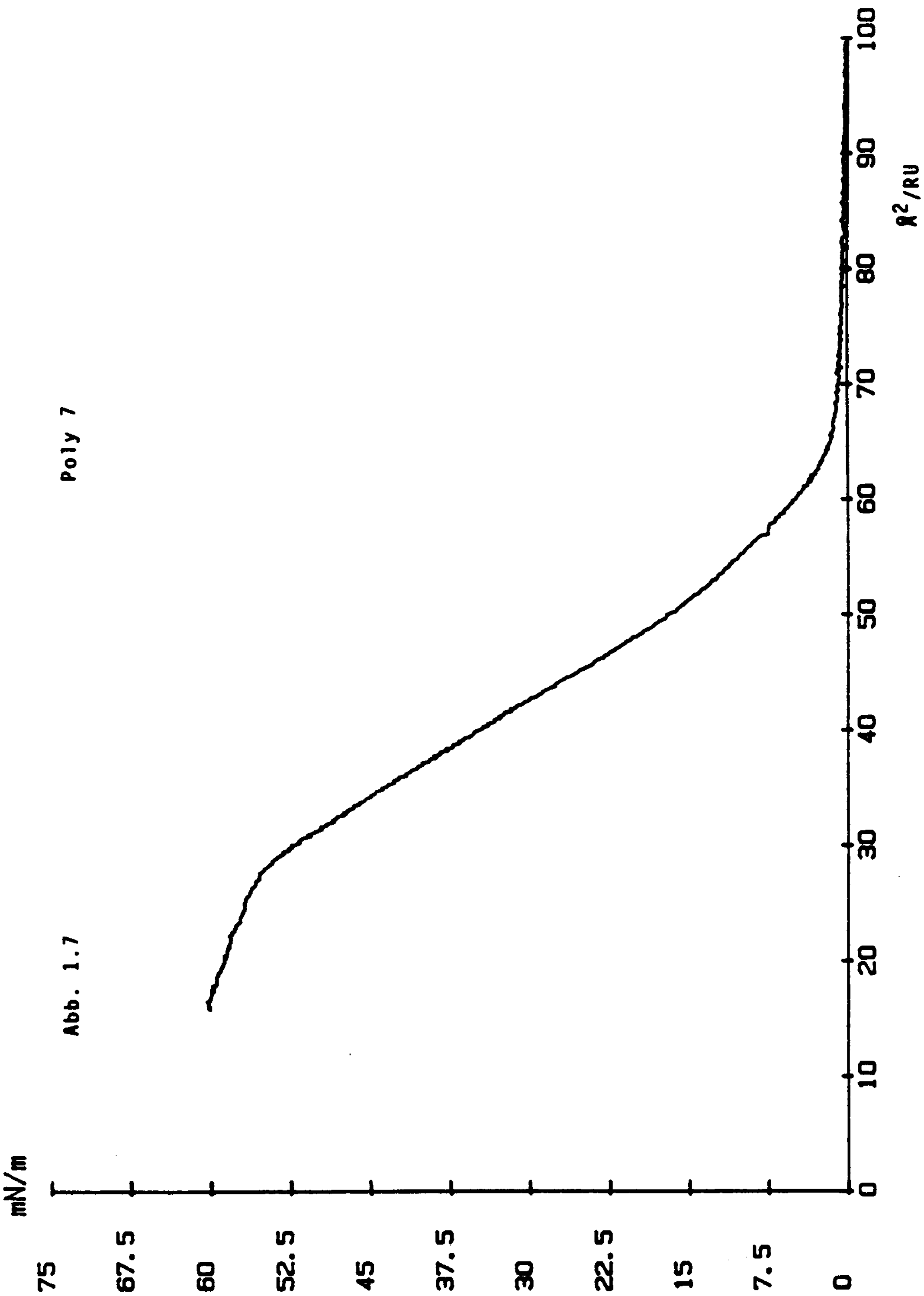
Abb. 1.7
Poly 7
mN/m
75
67.5
60
52.5
45
37.5
30
22.5
15
7.5
0
0
10
20
30
40
50
60
70
80
90
100
Å²/RU

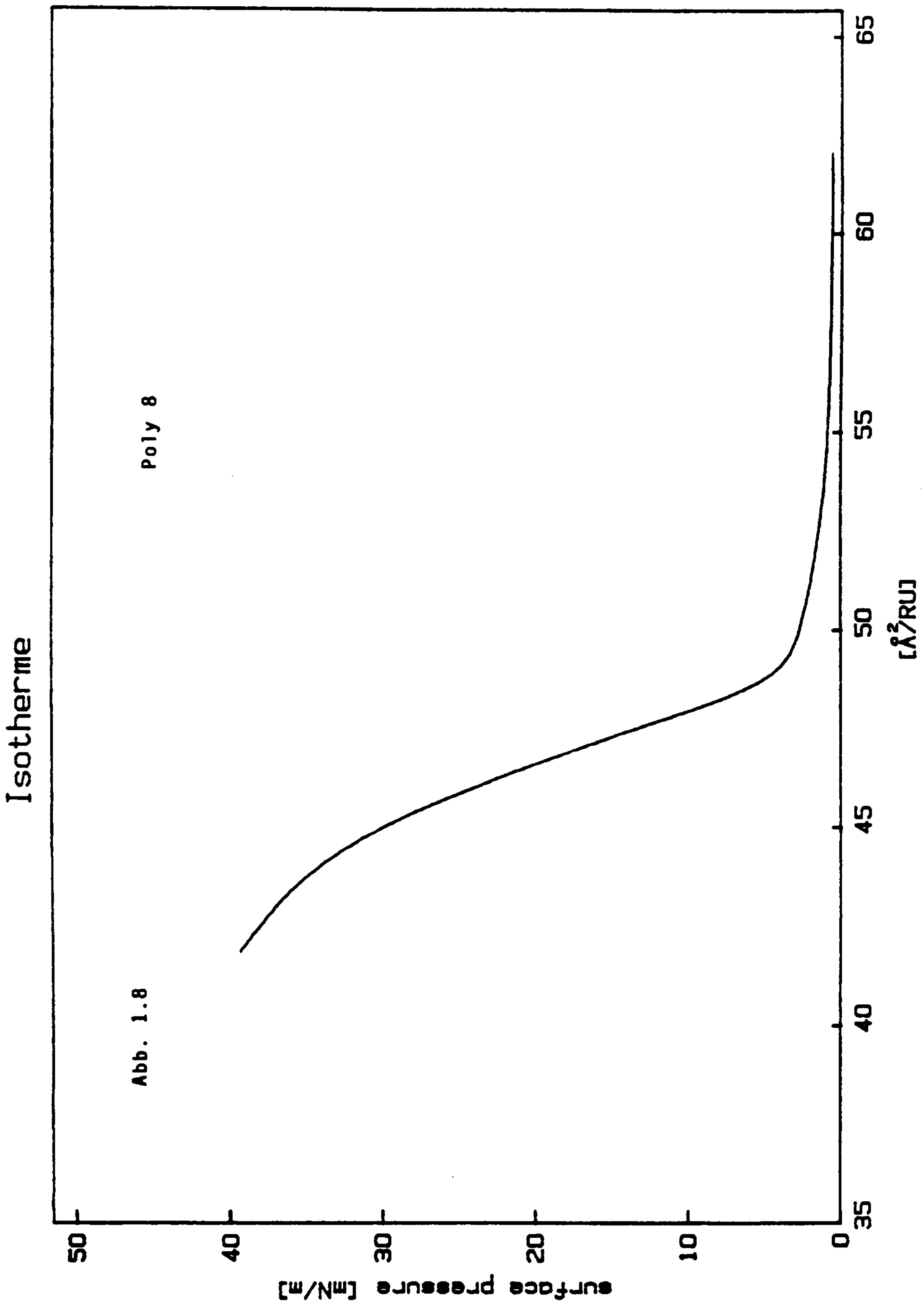

Isotherme
Poly 8
Abb. 1.8
surface pressure [mN/m]
[Å²/RU]
0
10
20
30
40
50
35
40
45
50
55
60
65

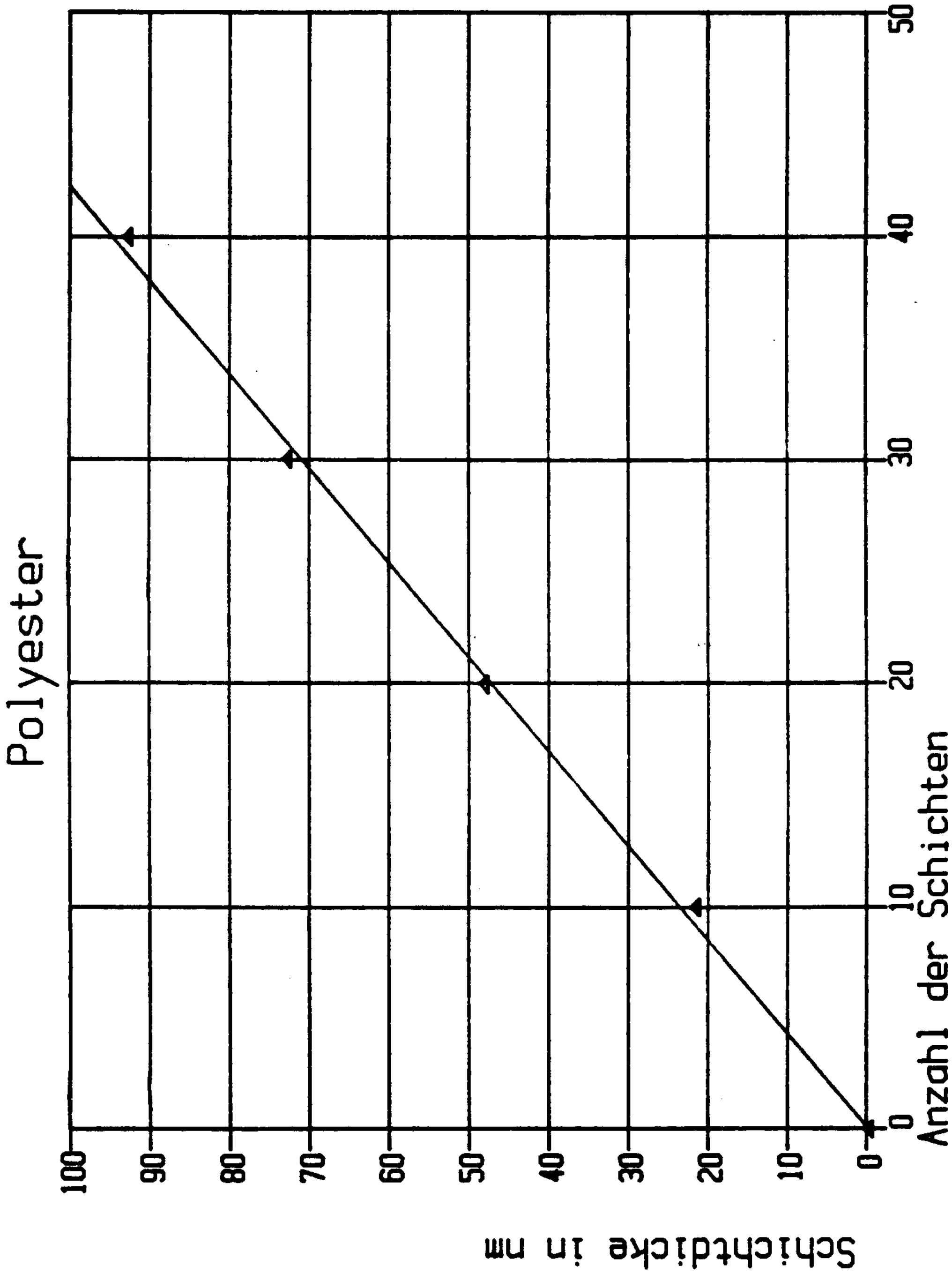
Polyester
Schichtdicke in nm
100
90
80
70
60
50
40
30
20
10
0
Anzahl der Schichten
0
10
20
30
40
50

Abb. 2

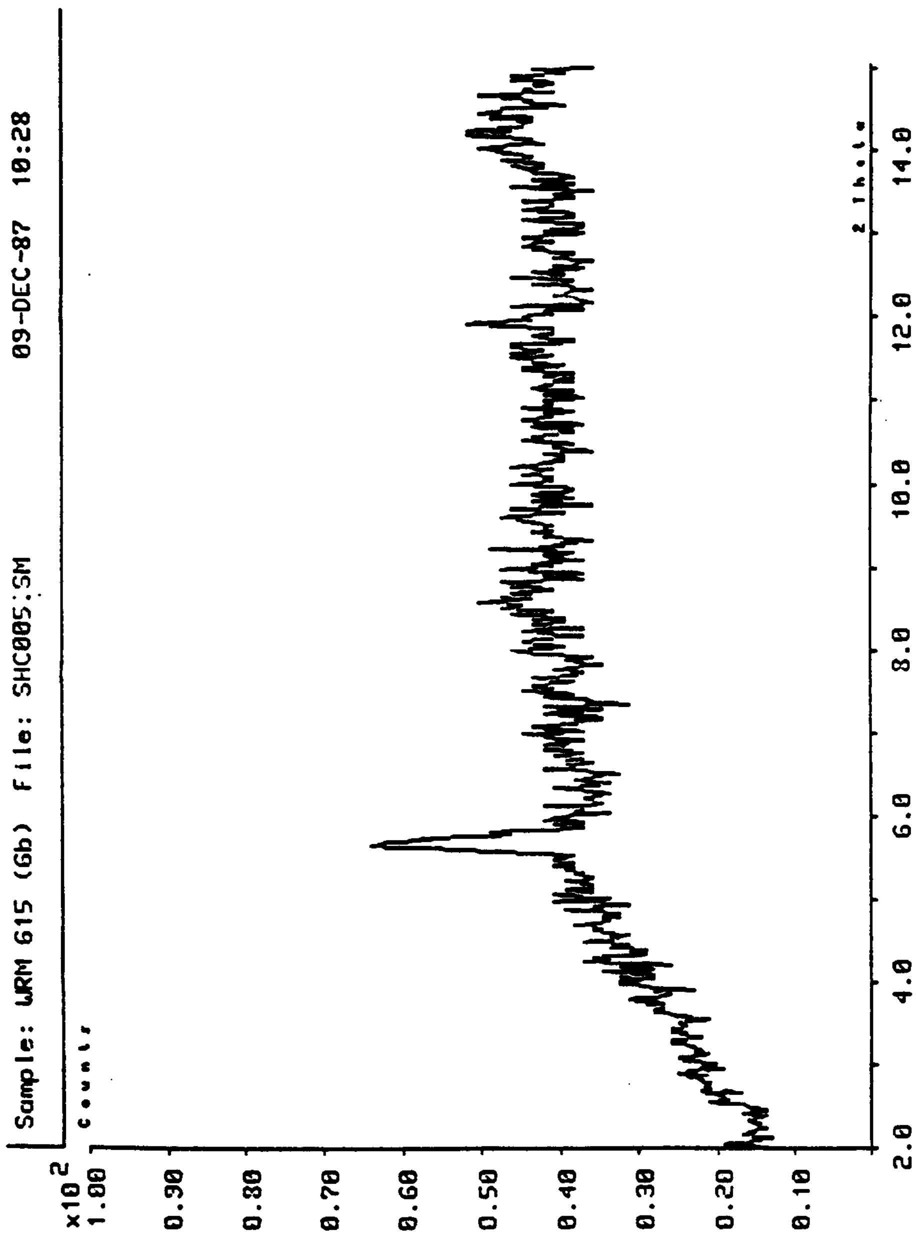
Sample: WRM 615 (Gb) File: SHC005.SM
09-DEC-87 10:28
Counts
x10^2
1.00
0.90
0.80
0.70
0.60
0.50
0.40
0.30
0.20
0.10
2.0
4.0
6.0
8.0
10.0
12.0
14.0
2 Theta

Abb. 3